# FASCICULE DE BREVET EUROPEEN

(11) **EP 3 366 955 B1**
(45) Date de publication et mention de la délivrance du brevet: **01.04.2020**
(21) Numéro de dépôt: 18155206.8
(22) Date de dépôt: 06.02.2018
(51) Int. Cl.: F16J 15/02, B64C 9/00

(54) **JOINT D'ETANCHEITE SOUPLE POUR UN AERONEF**
FLEXIBLE DICHTUNGSFUGE FÜR EIN LUFTFAHRZEUG
FLEXIBLE SEAL FOR AN AIRCRAFT

(30) Priorité: 22.02.2017 FR 1751388
(43) Date de publication de la demande: 29.08.2018
(73) Titulaire: Airbus Operations S.A.S., 31060 Toulouse (FR)
(72) Inventeur: LUNN, Thomas, 31700 BEAUZELLE (FR)
(74) Mandataire: Gicquel, Olivier Yves Gérard

(56) Documents cités:
- EP-A2- 2 266 877
- DE-U1-202012 104 401
- FR-A1- 2 973 467

## Description

### DOMAINE TECHNIQUE

La présente invention concerne un joint d'étanchéité souple pour un aéronef, comportant un corps creux allongé, un sabot et une lame, ainsi qu'un aéronef comprenant au moins un tel joint d'étanchéité.

### ETAT DE LA TECHNIQUE ANTERIEURE

Un aéronef comporte classiquement au moins une aile fixe sur laquelle sont montés des volets mobiles entre une position sortie et une position rentrée. Afin d'assurer la continuité aérodynamique entre l'aile et le volet en position rentrée, l'aile présente des joints souples qui viennent en appui contre la surface extérieure du volet.

Chaque joint d'étanchéité comporte un sabot pour fixer ledit joint le long du bord de fuite de l'aile et une lame avec un bord de fuite rectiligne, la lame est solidaire du sabot et s'étend depuis celui-ci vers le volet en venant en appui contre ce dernier.

Lorsque le volet est en position sortie, la lame n'est plus en appui, et du fait des efforts aérodynamiques qui s'exercent sur elle lors de la rentrée du volet, la lame peut se soulever et se coincer entre l'aile et le volet. La lame est alors déformée, ce qui a un impact sur l' aérodynamisme (voir document EP-A-2 266 877).

### EXPOSE DE L'INVENTION

Un objet de la présente invention est de proposer un joint d'étanchéité sous la forme d'une lame qui ne se coince pas entre l'aile et le volet lors de la rentrée de ce dernier.

A cet effet, est proposé un joint d'étanchéité souple destiné à être fixé entre une partie fixe et une partie mobile d'un aéronef, le joint d'étanchéité comportant :
- un corps creux allongé,
- un sabot solidaire du corps creux et destiné à être fixé à la partie fixe,
- une lame solidaire du corps creux et prévue pour s'étendre depuis le corps creux vers la partie mobile, la lame présentant un bord de fuite présentant des créneaux ou chevrons.

La mise en place d'un bord de fuite crénelé diminue le différentiel de pression de part et d'autre de la lame, et en laissant passer l'air entre la lame et la partie fixe avant le contact du bord de fuite avec la partie fixe, cela élimine le soulèvement de la lame. L'invention permet en outre de limiter l'usure du joint d'étanchéité et d'en augmenter la durée de vie.

Avantageusement, les créneaux sont répartis de manière régulière le long du bord de fuite.

Avantageusement, les créneaux prennent la forme d'ondulations en arc de cercle.

Avantageusement, la lame comporte un insert qui s'étend sur la longueur de la lame.

L'invention propose également un aéronef comportant une partie fixe, une partie mobile voisine de la partie fixe et un joint d'étanchéité selon l'une des variantes précédentes, où le sabot est fixé à la partie fixe et où la lame s'étend depuis le corps creux vers la partie mobile.

Avantageusement, la partie fixe est une aile et la partie mobile est un volet.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de dessus d'un aéronef comportant un joint d'étanchéité selon l'invention,
la Fig. 2 est une vue en coupe selon la ligne II-II de la Fig. 1 lorsque le volet est en position sortie, et
la Fig. 3 est une vue en perspective d'un joint d'étanchéité selon l'invention.

### EXPOSE DETAILLE DE MODES DE REALISATION

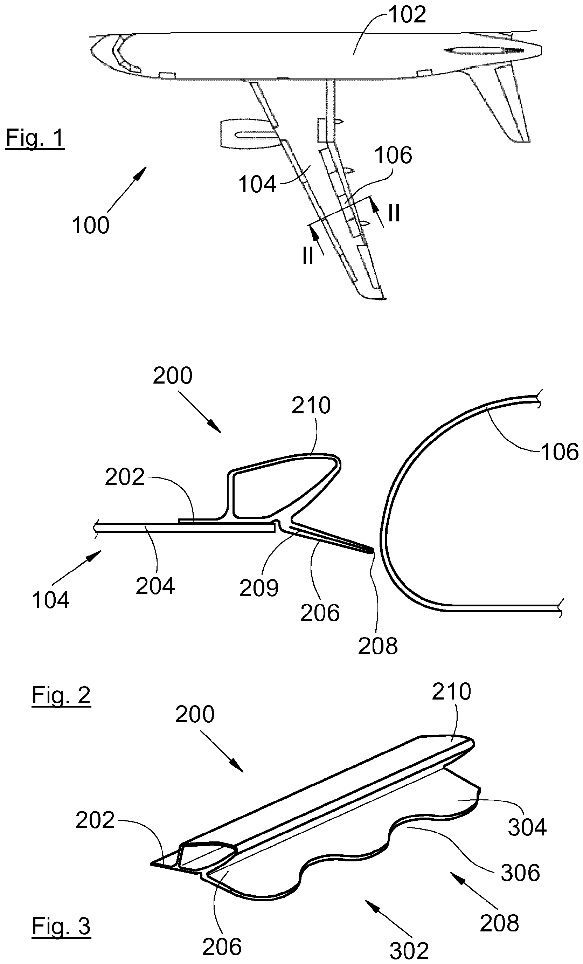

Dans la description qui suit, les termes relatifs à une position sont pris en référence à un aéronef en position normale d'avancement, c'est-à-dire comme il est représenté sur la Fig. 1.

La Fig. 1 montre un aéronef 100 qui comporte un fuselage 102 de part et d'autre duquel est fixée une aile 104. L'aile 104 qui constitue une partie fixe est fixe et porte des volets 106, chacun constituant une partie mobile qui est mobile entre une position sortie et une position rentrée.

La Fig. 2 montre une coupe de l'aéronef 100 lorsque le volet 106 est en position sortie par rapport à l'aile 104 qui est matérialisée ici par un panneau inférieur 204 qui forme la partie inférieure de l'aile 104.

L'aéronef 100 présente un joint d'étanchéité 200 souple selon l'invention. Le joint d'étanchéité 200 présente un corps creux 210, un sabot 202 solidaire du corps creux 210, une lame 206 solidaire du corps creux 210. Le sabot 202 et la lame 206 sont disposés de part et d'autre du corps creux 210.

Dans le mode de réalisation de l'invention présenté ici, le sabot 202 est fixé à l'aile 104, c'est-à-dire à la partie fixe, et plus particulièrement le long du bord de fuite de l'aile 104 et à l'intérieur du panneau inférieur 204.

La lame 206 s'étend depuis le corps creux 210 vers le volet 106, c'est-à-dire vers la partie mobile, et le bord de fuite 208 de la lame 206 est donc en regard du volet 106.

Le corps creux 210 est souple, allongé et s'étend en suivant le bord de fuite de l'aile 104. La souplesse du corps creux 210 permet entre autres l'articulation de la lame 206.

Lorsque le volet 106 est en position sortie, le bord de fuite 208 de la lame 206 est à distance du volet 106 et lorsque le volet 106 est en position rentrée, le bord de fuite 208 de la lame 206 vient en appui contre le volet 106.

La Fig. 3 est une vue en perspective du joint d'étanchéité 200.

Le bord de fuite 208 de la lame 206 n'est pas rectiligne, mais présente des créneaux ou chevrons 302 qui forment une succession de parties pleines 304 et de creux 306. Ainsi, lorsque le bord de fuite 208 se rapproche du volet 106, le bord de fuite 208 ne vient pas en contact avec le volet 106 sur toute sa longueur d'un coup.

En effet, lors du rapprochement du volet 106, les parties pleines 304 viennent d'abord en contact avec le volet 106, et la présence des creux 306 autorise le passage de l'air entre la lame 206 et le volet 106. Les créneaux 302 permettent une diminution du différentiel de pression de part et d'autre de la lame 206 juste avant le contact avec le volet 106, ce qui tend à éliminer le soulèvement de la lame 206. La lame 206 n'est alors plus coincée par le volet 106 qui se déplace vers sa position rentrée et la lame 206 vient en appui contre la surface extérieure du volet 106.

Selon une variante de l'invention, les créneaux ou chevrons 302 sont répartis de manière régulière le long du bord de fuite.

Comme précisé ci-dessus, le joint d'étanchéité 200 est souple pour permettre à la lame 206 de s'appuyer contre le volet 106 lorsque celui-ci est en position rentrée et assurer l'étanchéité. A titre d'exemple non limitatif le joint d'étanchéité 200 peut être en silicone ou en caoutchouc.

Selon une variante de l'invention, la lame 206 peut comporter un insert 209, par exemple métallique ou en fibre de verre. L'insert 209 s'étend sur la longueur de la lame 206 et permet de rigidifier la lame 206. L'insert peut être par exemple en métal ou en fibre de verre.

Dans le mode de réalisation de l'invention présenté à la Fig. 3, les créneaux 302 prennent la forme d'ondulations en arc de cercle, mais les créneaux peuvent prendre une autre forme comme par exemple en dents de scie, ou une succession de fentes, ou toutes autres formes qui permet d'avoir une succession de parties pleines et de creux.

La description de l'invention qui précède est plus particulièrement appliquée au volet d'une aile, mais elle s'applique de la même manière au volet de l'empennage ou à tout autre joint d'étanchéité qui est fixé à une partie fixe et qui est prévu pour venir en appui contre une partie mobile voisine de la partie fixe.

## Revendications

1. Joint d'étanchéité (200) souple destiné à être fixé entre une partie fixe (204) et une partie mobile (106) d'un aéronef (100), le joint d'étanchéité (200) comportant :
- un corps creux (210) allongé,
- un sabot (202) solidaire du corps creux (210) et destiné à être fixé à la partie fixe (204),
- une lame (206) solidaire du corps creux (210) et prévue pour s'étendre depuis le corps creux (210) vers la partie mobile (106), **caractérisé en ce que** ladite lame (206) présente un bord de fuite (208) présentant des créneaux (302) ou chevrons.

2. Joint d'étanchéité (200) selon la revendication précédente, **caractérisé en ce que** les créneaux (302) sont répartis de manière régulière le long du bord de fuite.

3. Joint d'étanchéité (200) selon l'une des revendications 1 ou 2, **caractérisé en ce que** les créneaux (302) prennent la forme d'ondulations en arc de cercle.

4. Joint d'étanchéité (200) selon l'une quelconque des revendications précédentes, **caractérisé en ce que** la lame (206) comporte un insert (209) qui s'étend sur la longueur de la lame (206).

5. Aéronef (100) comportant une partie fixe (204), une partie mobile (106) voisine de la partie fixe (204) et un joint d'étanchéité (200) selon l'une des revendications 1 à 4, où le sabot (202) est fixé à la partie fixe (204) et où la lame (206) s'étend depuis le corps creux (210) vers la partie mobile (106).

6. Aéronef (100) selon la revendication 5, **caractérisé en ce que** la partie fixe est une aile (104, 204) et **en ce que** la partie mobile est un volet (106).

## Patentansprüche

1. Flexible Dichtung (200) zur Befestigung zwischen einem feststehenden Teil (204) und einem beweglichen Teil (106) eines Luftfahrzeugs (100), wobei die Dichtung (200) Folgendes umfasst:
- einen länglichen Hohlkörper (210),
- einen fest mit dem Hohlkörper (210) verbundenen Schuh (202) zur Befestigung an dem feststehenden Teil (204),
- ein fest mit dem Hohlkörper (210) verbundenes Blatt, das dazu vorgesehen ist, sich von dem Hohlkörper (210) zu dem beweglichen Teil (106) zu erstrecken, **dadurch gekennzeichnet, dass** das Blatt (206) eine Austrittskante (208) aufweist, die Zinnen (302) oder Zacken aufweist.

2. Dichtung (200) nach dem vorhergehenden Anspruch, **dadurch gekennzeichnet, dass** die Zinnen (302) gleichmäßig entlang der Austrittskante verteilt sind.

3. Dichtung (200) nach einem der Ansprüche 1 oder 2, **dadurch gekennzeichnet, dass** die Zinnen (302) in Form von Kreisbogenwellen vorliegen.

4. Dichtung (200) nach einem der vorhergehenden Ansprüche, **dadurch gekennzeichnet, dass** das Blatt (206) einen Einsatz (209) umfasst, der sich über die Länge des Blatts (206) erstreckt.

5. Luftfahrzeug (100), das einen feststehenden Teil (204), einen beweglichen Teil (106) neben dem feststehenden Teil (204) und eine Dichtung (200) nach einem der Ansprüche 1 bis 4 umfasst, wobei der Schuh (202) an dem feststehenden Teil (204) befestigt ist und wobei sich das Blatt (206) von dem Hohlkörper (210) zu dem beweglichen Teil (106) erstreckt.

6. Luftfahrzeug (100) nach Anspruch 5, **dadurch gekennzeichnet, dass** der feststehende Teil ein Flügel (104, 204) ist und dass der bewegliche Teil eine Klappe (106) ist.

## Claims

1. Flexible seal (200) intended to be fixed between a fixed part (204) and a mobile part (106) of an aircraft (100), the seal (200) comprising:
- an elongate hollow body (210),
- a shoe (202) secured to the hollow body (210) and intended to be fixed to the fixed part (204),
- a blade (206) secured to the hollow body (210) and designed to extend from the hollow body (210) towards the mobile part (106), **characterized in that** said blade (206) has a leak edge (208) having notches (302) or chevrons.

2. Seal (200) according to the preceding claim, **characterized in that** the notches (302) are distributed evenly along the leak edge.

3. Seal (200) according to either one of Claims 1 and 2, **characterized in that** the notches (302) take the form of circular arc undulations.

4. Seal (200) according to any one of the preceding claims, **characterized in that** the blade (206) comprises an insert (209) which extends over the length of the blade (206).

5. Aircraft (100) comprising a fixed part (204), a mobile part (106) next to the fixed part (204) and a seal (200) according to one of Claims 1 to 4, in which the shoe (202) is fixed to the fixed part (204) and in which the blade (206) extends from the hollow body (210) towards the mobile part (106).

6. Aircraft (100) according to Claim 5, **characterized in that** the fixed part is a wing (104, 204) and **in that** the mobile part is a flap (106).
